# EUROPEAN PATENT APPLICATION

(11) **EP 3 949 753 A1**
(43) Date of publication of application: **09.02.2022**
(21) Application number: 20782714.8
(22) Date of filing: 27.03.2020
(51) Int. Cl.: A23L 3/36, F25D 13/00, F25D 13/06, A23L 7/10, A23L 7/109, F25C 1/00

(54) **FOOD FREEZING DEVICE, FOOD FREEZING METHOD AND FROZEN FOOD**

(30) Priority: 29.03.2019 JP 2019067913
(71) Applicant: Blanctec International Co., Ltd., Tokyo 102-0093 (JP)
(72) Inventor: HIROKANE, Yoshio, Tokyo 1020093 (JP)
(74) Representative: Hoffmann Eitle
(86) International application number: PCT/JP2020/013933
(87) International publication number: WO 2020/203732

(57) **Abstract**

To provide a food freezing device, a food freezing method, and a frozen food with which an eating quality as before quickly frozen can be obtained even when foods such as cooked rice foods and noodles are quickly frozen.

A food freezing device 400 of the present invention includes: a freezing tank 410 that stores an ice slurry S in a state of being maintained at equal to or less than -10°C; a hanger 431 that holds an α-starch-containing frozen food F in the ice slurry S stored in the freezing tank 410; an ice slurry supply means (420, 450, 456, and 300) for supplying the ice slurry into the freezing tank 410; and a flow means (130) for causing the ice slurry to flow such that the ice slurry S collides with the frozen food F at equal to or greater than a predetermined relative speed. The frozen food F is a cooked rice food such as nigiri sushi or noodles such as udon noodles that contain a large amount of α-starch.

## Description

### Technical Field

The present invention relates to a food freezing device and a food freezing method for freezing cooked rice foods such as nigiri sushi and rice balls, noodles such as udon noodles, buckwheat noodles, and ramen noodles, and other foods, and a frozen food.

### Background Art

The main component of cooked rice foods, noodles, and the like (hereinafter, mainly referred to as "cooked rice foods") is starch consisting of a large amount of glucose. Starch is a carbohydrate composed of two polymers, amylose and amylopectin. Amylose is a polymer in which glucose is linearly chained. Amylopectin is a polymer in which glucose is branched. Starch is transformed by being heated or cooled. Raw starch has an arrangement structure (micelle structure) in which amylose and amylopectin are firmly aligned in one direction. The starch in such a state is called β-starch. β-starch is in a state in which water and enzymes are not easily compatible, and is suitable for preservation, but is hardly digested.

β-starch becomes sticky and pasty when added with water and heated. This is because water molecules enter between amylose and amylopectin, resulting in a swollen state in which a bundle of long chain molecules is loosened. This phenomenon is called gelatinization of starch. The gelatinized starch is called α-starch. Since amylose and amylopectin have lost regularity, α-starch is not firmly bound, and water molecules enter the gap. α-starch is easily affected by digestive enzymes and is easily digested and absorbed. α-starch-containing cooked rice foods are delicious. In order to gelatinize β-starch-containing rice, heating at 100°C for 20 minutes or more with the moisture of 30% or more is required.

The transformation from retrograding to gelatinization is a reversible reaction. As the temperature drops, α-starch becomes firm and becomes similar to β-starch. This phenomenon is called retrograding of starch. Retrograding hardly occurs at 60°C or higher, and proceeds most at 2 to 4°C (There is also a view that the temperature is 0 to 3°C). β-starch-containing cooked rice foods are not sticky and not delicious.

As a method for preventing gelatinized starch from being retrograding, quick freezing is known. Quick freezing refers to freezing by a method in which a food product temperature passes through a maximum ice crystal formation zone (usually a temperature zone of -5°C to -1°C) in a short time (usually within 30 minutes). In quick freezing, the growth of ice is suppressed at the time of freezing by freezing a food by quickly passing the food through a temperature zone in which the moisture in the food is frozen. Such quick freezing is employed not only in cooked rice foods but also in various foods including fish meat. The frozen foods that are quickly frozen can maintain freshness, flavor, and texture when thawed, and can reproduce, at the time of thawing, good quality including eating quality before the quick freezing.

Patent Literature 1 describes a machine for both freezing and thawing for quickly freezing nigiri sushi. The machine for both freezing and thawing described in Patent Literature 1 includes a freezing and thawing treatment tank (treatment tank) for quickly freezing nigiri sushi at around -30°C in less than 20 minutes and thawing nigiri sushi at -8°C. Cooling thawing treatment water (treatment water) cooled to -8°C, -30°C, or the like is stored ("charged" in Patent Literature 1) in the treatment tank. Ethyl alcohol is added to the treatment water in order to lower the freezing point. Furthermore, a food protease enzyme is added to the treatment water in order to improve the eating quality.

The nigiri sushi is vacuum-packed so as to be completely degassed with a wrap film or so as to leave a little air. The vacuum-packed nigiri sushi is quickly and instantly frozen by being submerged and passing through for less than 20 minutes in the treatment water stored in the treatment tank.

The quickly and instantly frozen nigiri sushi is frozen and stored in a low-temperature air freezer. The quickly and instantly frozen nigiri sushi is thawed in the treatment water at around -8°C in the treatment tank over 10 to 15 minutes. The thus thawed nigiri sushi is considered to be able to reproduce freshness at the time of freezing as it is.

### Citation List

### Patent Literature

Patent Literature 1: JP 2008-301803 A

### Summary of Invention

### Technical Problem

The machine for both freezing and thawing described in Patent Literature 1 quickly and instantly freezes nigiri sushi on which seafood is placed on vinegared rice containing vinegar. The frozen nigiri sushi produced by the machine for both freezing and thawing described in Patent Literature 1 is frozen by passing through a temperature zone of -5°C to -1°C for less than 20 minutes by treatment water added with ethylene alcohol. However, such frozen nigiri sushi sometimes has a hard texture with crumbly rice when thawed.

This is also true for noodles such as udon noodles and ramen noodles that are made from flour. If noodles are produced by the machine for both freezing and thawing described in Patent Literature 1, the noodles do not sometimes necessarily hold the eating quality when thawed.

An object of the present invention is to provide a food freezing device, a food freezing method, and a frozen food with which an eating quality as before quickly frozen can be obtained even when foods such as cooked rice foods and noodles are quickly frozen.

### Solution to Problem

A food freezing device according to the present invention includes: a freezing tank that stores an ice slurry in a state of being maintained at equal to or less than -10°C; a hanger that holds an α-starch-containing frozen food in the ice slurry stored in the freezing tank; an ice slurry supply means for supplying an ice slurry into the freezing tank; and a flow means for causing an ice slurry to flow such that an ice slurry collides with the frozen food at equal to or greater than a predetermined relative speed.

In the food freezing device according to the present invention, the frozen food is a cooked rice food such as nigiri sushi or noodles such as udon noodles.

In the food freezing device according to the present invention, the frozen food is vacuum-packed.

A food freezing method according to the present invention is a food freezing method that quickly freezes an α-starch-containing frozen food, the method including quickly freezing the frozen food by storing an ice slurry in a freezing tank in a state of being maintained at equal to or less than -10°C, holding the frozen food in an ice slurry in the freezing tank by a hanger, and causing an ice slurry to flow such that an ice slurry collides with the frozen food at equal to or greater than a predetermined relative speed.

In the food freezing method according to the present invention, the frozen food is a cooked rice food such as nigiri sushi or noodles such as udon noodles.

In the food freezing method according to the present invention, the frozen food is vacuum-packed.

A frozen food according to the present invention is a frozen food where a frozen food containing gelatinized starch is quickly frozen, in which gelatinized starch accounts for equal to or greater than 80% of a total starch.

In the frozen food according to the present invention, the frozen food is a cooked rice food or noodles.

The cooked rice food in this case is nigiri sushi on which seafood is placed on vinegared rice, and a K value of the seafood is equal to or less than 20.

### Advantageous Effects of Invention

According to the present invention, it is possible to provide a food freezing device, a food freezing method, and a frozen food with which an eating quality as before quickly frozen can be obtained even when foods such as cooked rice foods and noodles are quickly frozen.

### Brief Description of Drawings

Fig. 1 is a schematic front view illustrating one embodiment of a food freezing device according to the present invention.
Fig. 2 is a schematic plan view illustrating one embodiment of the food freezing device according to the present invention.
Fig. 3 is a schematic plan view illustrating one embodiment of a freezing tank constituting the food freezing device according to the present invention.
Fig. 4 is a schematic cross-sectional side view illustrating one embodiment of the freezing tank and an ice slurry supply means that constitute the food freezing device according to the present invention.
Fig. 5 is a cross-sectional perspective view illustrating an outline of a flake ice production device.
Fig. 6 is a schematic view illustrating an outline of a flake ice production system.
Fig. 7 is a schematic perspective view illustrating nigiri sushi as an example of a frozen food.
Fig. 8 is schematic views illustrating an outline of a food freezing method according to the present invention, where A is a schematic view of a frozen food illustrating a middle of being vacuum-packed, and B is a schematic view illustrating a vacuum-packed frozen food.

### Description of Embodiments

The food freezing device according to the present embodiment quickly freezes a frozen food using an ice slurry maintained at equal to or less than -10°C. The frozen foods are foods such as α-starch-containing cooked rice foods and noodles. The cooked rice foods may be not only sushi such as nigiri sushi and inari sushi but also foods in which a large number of rice grains are hardened such as rice processed foods including various types of rice balls. The noodles may be not only udon noodles or ramen noodles but also various kinds of pastas and the like. Furthermore, the frozen food is not limited as long as it contains α-starch, such as pizzas, okonomiyaki pancakes, takoyaki octopus dumplings, and sponge cakes.

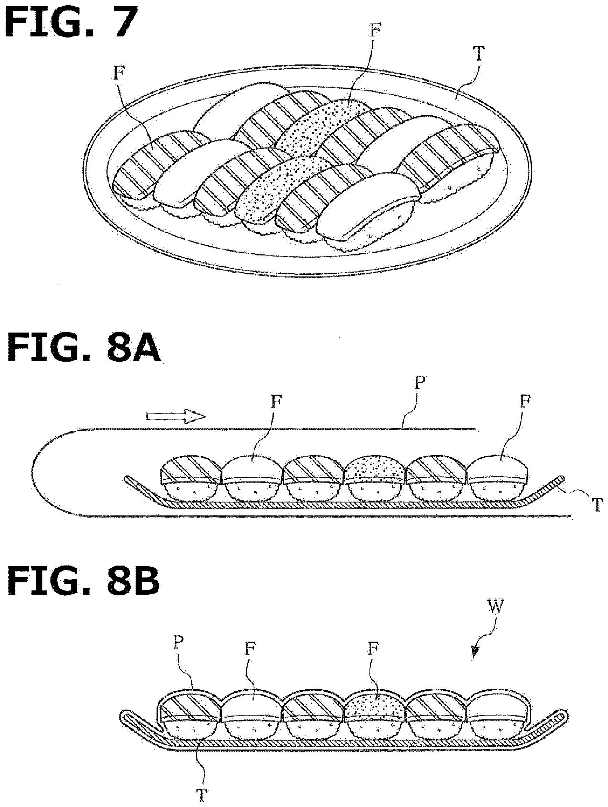

As illustrated in Figs. 7 and 8, a frozen food F in the present embodiment will be described as nigiri sushi F. Fig. 7 is a schematic perspective view illustrating the nigiri sushi F as an example of the frozen food F. Fig. 8 is schematic views illustrating an outline of the food freezing method according to the present invention, where A is a schematic view of the frozen food F illustrating a middle of being vacuum-packed, and B is a schematic view illustrating the vacuum-packed frozen food F.

As illustrated in Fig. 7, a plurality of pieces of nigiri sushi F are quickly frozen in a state of being placed on a serving plate T. Although not illustrated, ginger or a decorative plastic sheet may be placed on the serving plate T. In Fig. 7, twelve pieces of nigiri sushi F are arranged in two rows. However, the nigiri sushi F may be one piece, or may be arranged in one row or three or more rows. In any case, the vinegared rice of the nigiri sushi F contains a large amount of α-starch immediately after being shaped, e.g., being pressed with hands. The moisture content of the rice is set to 60 to 70%. By setting the moisture content of the rice to a value in this range, the eating quality after thawing can be improved. As illustrated in Fig. 8, the nigiri sushi F placed on the serving plate T is wrapped with a packaging material P such as a transparent film.

As illustrated in Fig. 8A, the nigiri sushi F placed on the serving plate T is wrapped in the packaging material P. The nigiri sushi F placed on the serving plate T may be wrapped with a sheet-like packaging material P, or the nigiri sushi F placed on the serving plate T may be placed in a bag-like packaging material P. As illustrated in Fig. 8B, the inside of the packaging material P where the nigiri sushi F placed on the serving plate T is wrapped is evacuated. This packaging material P is brought into close contact (in the figure, they are not brought into close contact for ease of viewing) with the nigiri sushi F placed on the serving plate T and the serving plate T. The nigiri sushi F placed on the serving plate T and having the packaging material P evacuated in this manner is referred to as "wrapped nigiri sushi W".

An ice slurry for quickly freezing the wrapped nigiri sushi W is a sherbet-like mixture in which flake ice (solid) in which hybrid ice (described later) is processed into a flake and an aqueous solution (brine) containing a solute are mixed at a predetermined ratio, and has fluidity. By adding flake ice to the ice slurry, it is possible to easily adjust the constituent ratio of flake ice and brine contained in the ice slurry.

Hybrid ice is ice in which an aqueous solution (brine) containing a solute is solidified so that the concentration of the solute becomes substantially uniform. The hybrid ice satisfies at least conditions
(a) the temperature at the time of completion of melting is below 0°C, and
(b) the change rate of solute concentration of an aqueous solution (brine) in which ice is melted in a melting process (hereinafter, sometimes abbreviated as "change rate of solute concentration") is equal to or less than 30%,
and has a characteristic of being able to efficiently freeze a frozen item.

The type of the solute contained in the hybrid ice is not particularly limited as long as it is a solute when water is used as a solvent, and can be appropriately selected according to a desired freezing point, the purpose of use of the ice, and the like. Examples of the solute include a solid solute and a liquid solute, and typical examples of the solid solute include salts (inorganic salt, organic salt, and the like).

In particular, common salt (NaCl) among salts does not excessively lower the temperature of the freezing point, and thus is suitable for freezing fresh plants/animals or parts thereof used as ingredients, rice, or the like for nigiri sushi. Since common salt is contained in seawater, it is suitable also in terms of easiness in procurement. Examples of the liquid solute include ethylene glycol. One type of solute may be contained alone or two or more types of solutes may be contained in combination.

The brine is, for example, an aqueous solution containing a solute such as a sodium chloride aqueous solution (salt water), a calcium chloride aqueous solution, a magnesium chloride aqueous solution, and an ethylene glycol aqueous solution, and having a low freezing point. The brine as a raw material of flake ice is not particularly limited, but in the case of using common salt as a solute, the brine is preferably seawater, water in which salt is added to seawater, or diluted water of seawater. This is because seawater, water in which salt is added to seawater, or diluted water of seawater can be easily procured, and thus the procurement cost can be reduced.

The thermal conductivity of brine (salt water) containing salt as a solute is about 0.58 W/m K, whereas the thermal conductivity of flake ice in which brine containing common salt as a solute is frozen is about 2.2 W/m K. That is, since the thermal conductivity is higher in flake ice (solid) than in brine (liquid), it is possible to freeze the wrapped nigiri sushi W, which is a frozen item, quicker with the flake ice (solid).

However, the area in contact with the wrapped nigiri sushi W becomes small with the flake ice (solid) as it is. Therefore, the flake ice and the brine are mixed to give it a state of an ice slurry, thereby providing fluidity. This can uniformly bring the flake ice (solid) into contact with the wrapped nigiri sushi W, and can quickly freeze the wrapped nigiri sushi W.

The ice slurry containing flake ice may or may not further contain a solid having a higher thermal conductivity than that of the flake ice, but preferably contains.

Normally, when a frozen item is to be frozen in a short time, a solid having a high thermal conductivity can be used as a refrigerant, but in this case, the solid itself also loses cold energy in a short time and the temperature easily rises, and thus is unsuitable for long-time freezing.

That is, it becomes better not to use a solid having a high thermal conductivity as a refrigerant for long-time freezing, but it is unsuitable for freezing the wrapped nigiri sushi W in a short time.

However, since flake ice has a high freezing ability, it is useful in that it can freeze for a longer time while obtaining a short-time freezing ability by a solid having a high thermal conductivity.

Note that examples of the solid having a higher thermal conductivity than that of flake ice include metal (aluminum, silver, copper, gold, duralumin, antimony, cadmium, zinc, tin, bismuth, tungsten, titanium, iron, lead, nickel, platinum, magnesium, molybdenum, zirconium, beryllium, indium, niobium, chromium, cobalt, iridium, and palladium), alloy (steel, nickel-chromium alloy, aluminum bronze, gunmetal, brass, manganese, nickel silver, constantan, solder, alumel, chromel, monel metal, platinum iridium, and the like), silicon, carbon, ceramics, marble, and brick.

The solid having a higher thermal conductivity than that of flake ice is preferably a solid having a thermal conductivity of equal to or greater than 2.3 W/m K, more preferably a solid having a thermal conductivity of equal to or greater than 10 W/m K, still more preferably a solid having a thermal conductivity of equal to or greater than 50 W/m K, yet more preferably a solid having a thermal conductivity of equal to or greater than 100 W/m K, even more preferably a solid having a thermal conductivity of equal to or greater than 200 W/m K, and particularly preferably a solid having a thermal conductivity of equal to or greater than 400 W/m K.

When the ice slurry containing flake ice contains a solid having a higher thermal conductivity than that of flake ice, it is suitable for long-time freezing even if it contains many solids, as described above. For example, the mass of a solid having a higher thermal conductivity than that of flake ice/the mass of flake ice contained in ice slurry (or the total mass of flake ice and brine contained in ice slurry) may be equal to or greater than 1/100000. The solid may have any shape, and is preferably granular. This is because there are advantages such as an increase in the area in contact with the ice slurry and ease of processing.

Although the solid may exist in the form of being contained inside the flake ice, or may exist outside the flake ice, the solid becomes easier to come into direct contact with the wrapped nigiri sushi W when existing outside the flake ice, and thus the freezing ability increases. For this reason, the solid preferably exists outside the ice. If the ice slurry containing flake ice contains the solid, the solid may be mixed after the flake ice is produced by a flake ice production device described later, or the solid may be mixed in advance with brine as a raw material to produce flake ice.

Flake ice and brine contained in the ice slurry both contain the same solute. The concentration of flake ice in the ice slurry (IPF: Ice Packing Factor) is calculated by "IPF = (mass of flake ice)/(mass of flake ice + mass of brine)" and is controlled to be in a predetermined range. The solute concentration of flake ice and the solute concentration of brine are preferably close to each other. The reason is as follows.

That is, when the solute concentration of flake ice is higher than the solute concentration of brine, the temperature of flake ice becomes lower than the saturation freezing point of brine, and therefore the brine freezes immediately after brine with a lower solute concentration is mixed.

In contrast, when the solute concentration of flake ice is lower than the solute concentration of brine, the saturation freezing point of brine becomes lower than the saturation freezing point of flake ice. For this reason, the temperature of the ice slurry in which the flake ice and the brine are mixed is lowered. Therefore, in order not to fluctuate the state (the state of ice slurry) of the mixture of the flake ice and the brine, the solute concentrations of the flake ice and the brine to be mixed are preferable to be set to the same level as described above.

In a case of the state of ice slurry, the brine may be melted flake ice or may be separately prepared, but is preferably melted flake ice.

Here, one embodiment of a freezing device that quickly freezes the wrapped nigiri sushi W by an ice slurry will be described with reference to the drawings.

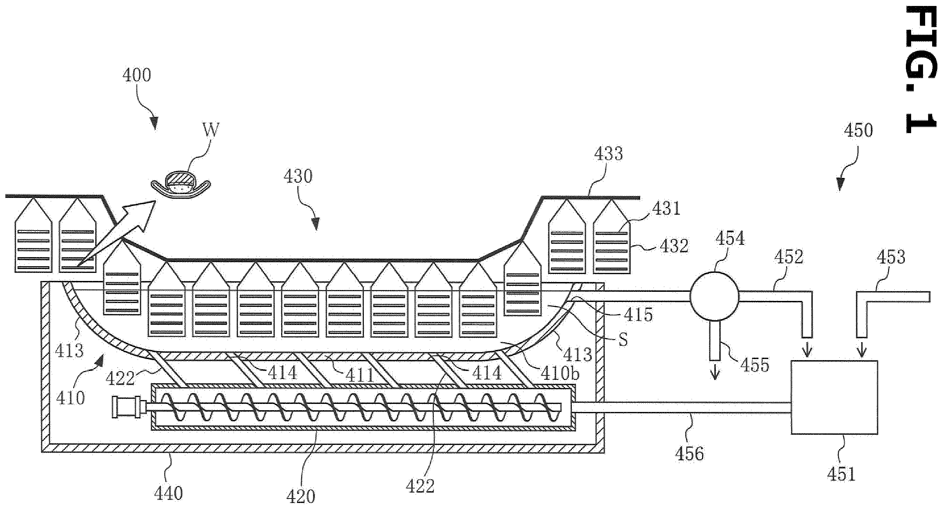

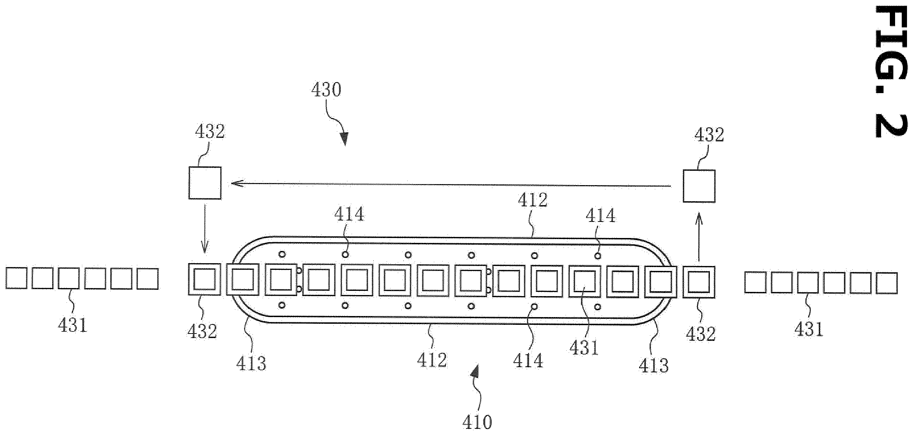

Fig. 1 is a schematic front view illustrating one embodiment of a freezing device 400 according to the present invention. Fig. 2 is a schematic plan view illustrating one embodiment of the freezing device 400 according to the present invention.

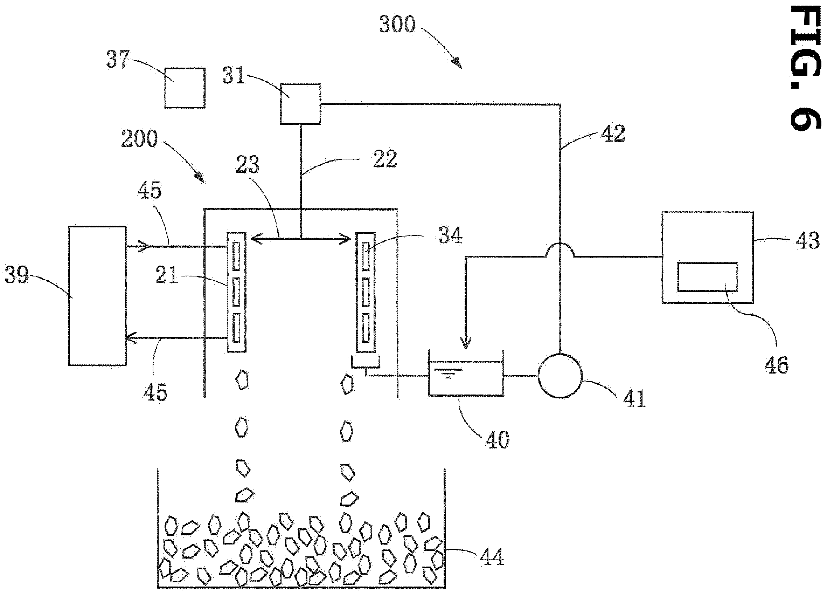

As illustrated in Fig. 1, the freezing device 400 that quickly freezes the wrapped nigiri sushi W by the ice slurry includes a freezing tank 410, a screw conveyor 420, a movement means 430, an ice slurry regeneration means 450, an ice slurry supply pipe 456, and a flake ice production system 300 (see Fig. 6). The screw conveyor 420, the ice slurry regeneration means 450, the ice slurry supply pipe 456, and the flake ice production system 300 correspond to the "ice slurry supply means" in the claims.

The freezing tank 410 stores the ice slurry S in a state of equal to or less than - 10°C, and freezes the wrapped nigiri sushi W. When the ice slurry S is stored in the state of -10°C, saline water at a concentration of 13.6% is used as brine. When the ice slurry S is stored in the state of -15°C, saline water at a concentration of 17.5% is used as brine. When saline water at a concentration of 23.5% is used as brine, the ice slurry S can be stored in the state of -21.3°C. The movement means 430 moves the wrapped nigiri sushi W in the ice slurry S stored in the freezing tank 410. The movement means 430 serves as a flow means for causing the ice slurry S to move so that the ice slurry S collides with the wrapped nigiri sushi W at equal to or greater than a predetermined relative speed.

As illustrated in Figs. 1 and 2, the movement means 430 includes a hanger 431 that holds the wrapped nigiri sushi W as a plurality of trays on which the wrapped nigiri sushi W is placed, a rack 432 that holds the hangers 431 in a state of being stacked at intervals, and a conveyor 433 that suspends and moves the rack 432.

The conveyor 433 circulates the rack 432 such that the rack 432 moves from the upstream side to the downstream side of the freezing tank 410 in the ice slurry S stored in the freezing tank 410, the rack 432 descends so as to be immersed in the ice slurry S on the upstream side, the rack 432 is pulled up from the ice slurry S on the downstream side, and the rack 432 returns to the upstream side of the freezing tank 410 on the lateral side along the freezing tank 410.

The conveyor 433 is equipped so as to return the raised rack 432 to the downstream end of the freezing tank 410 and circulate. That is, the conveyor 433 has an onward path in which the rack 432 moves from the upstream end to the downstream end in the freezing tank 410, and a return path in which the rack 432 is returned to the upstream end of the freezing tank 410 at a position adjacent to the onward path. The hanger 431 on which the wrapped nigiri sushi W is placed is placed in the rack 432 at the upstream end, and the hanger 431 on which the wrapped nigiri sushi W is quickly frozen is taken out of the rack 432 at the downstream end.

The freezing tank 410 has a shape like a bathtub in which a bottom surface portion 411, a pair of side surface portions 412, and a pair of end portions 413 are integrated. However, each boundary portion where the bottom surface portion 411, the pair of side surface portions 412, and the pair of end portions 413 are adjacent to each other is smoothly continued in a curved surface shape.

The bottom surface portion 411 has a width larger than the width of the rack 432, and has a length necessary for the wrapped nigiri sushi W placed on the hanger 431 to move in the ice slurry and to be frozen. The freezing tank 410 naturally has such a depth that all the hangers 431 stacked in plural stages are immersed in the ice slurry.

A large number of ice slurry ejection ports 414 for ejecting and supplying the ice slurry are formed at least on the bottom surface portion 411 on the bottom side of the freezing tank 410. The ice slurry ejection port 414 may be formed also on the bottom surface portion 411 side of the side surface portion 412 of the freezing tank 410. The ice slurry ejection port 414 is configured to eject the ice slurry S so as to face the moving direction of the rack 432 suspended on the conveyor 433 and moving.

An ice slurry discharge port 415 for discharging the ice slurry in the freezing tank 410 is formed at one end portion 413 of the freezing tank 410, e.g., at the end portion 413 on the downstream side. The freezing tank 410 is surrounded by a heat insulation material 440 except for the upper side.

The ice slurry S is fed from the screw conveyor 420 to a supply side pipe 422 and supplied into the freezing tank 410. The screw conveyor 420 includes a cylindrical body (not numbered) in which a plurality of small holes (not numbered) are formed, and a screw (not numbered) that rotates in the circumferential direction in this cylindrical body (not numbered). The ice slurry is charged in the cylindrical body and moves so as to be axially pumped in the cylindrical body by rotation of the screw.

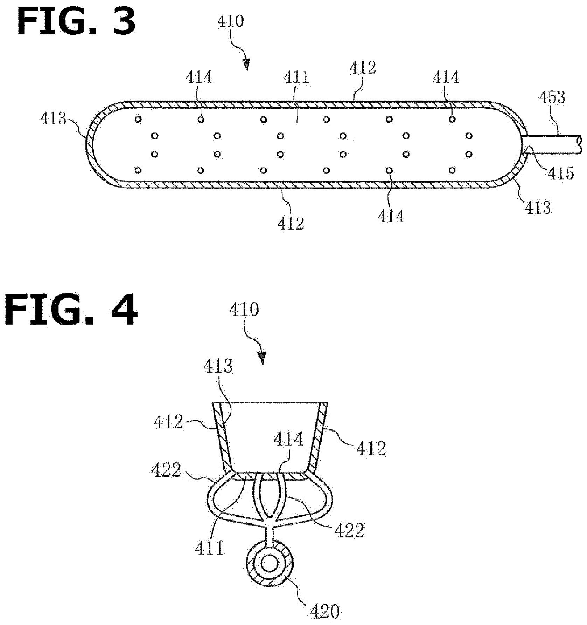

As illustrated in Figs. 1 and 3, the supply side pipe 422 is bridged between the small holes of the screw conveyor 420 and the ice slurry ejection port 414 of the freezing tank 410. The supply side pipe 422 is inclined such that the ice slurry flows in a direction opposite to the moving direction of the hanger 431, i.e., from the downstream side toward the upstream side.

The ice slurry regeneration means 450 for regenerating the ice slurry S stored in the freezing tank 410 is connected to the ice slurry discharge port 415 of the freezing tank 410. Here, "regeneration" refers to reusing without discarding the ice slurry S that has been supplied into the freezing tank 410 and has frozen the wrapped nigiri sushi W and then is becoming brine, or reusing for separating the brine, mixing this brine with flake ice to produce the ice slurry S.

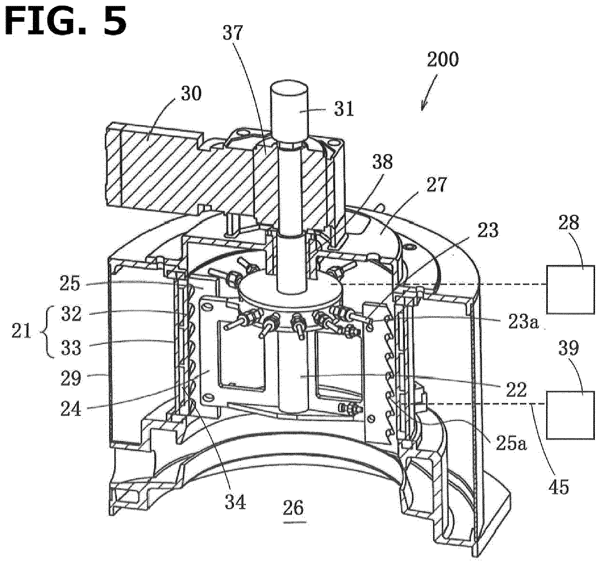

The ice slurry regeneration means 450 includes an ice slurry mixing container 451 and an ice slurry return pipe 452. Into the ice slurry mixing container 451, the ice slurry S produced from the flake ice produced by the flake ice production system 300 (see Fig. 6) including a flake ice production device 200 (see Fig. 5) is injected with a pipe 453. The ice slurry S discharged from the freezing tank 410 with the ice slurry return pipe 452 is also injected into the ice slurry mixing container 451.

The upstream end of the ice slurry return pipe 452 is connected to the ice slurry discharge port 415 of the freezing tank 410. A separation means 454 is provided in the middle of the ice slurry return pipe 452. A brine separation pipe 455 is connected to the separation means 454. The separation means 454 separates the ice slurry S discharged from the freezing tank 410 and flowing in the ice slurry return pipe 452 into the ice slurry S to be sent to the ice slurry mixing container 451 and brine. Therefore, the separation means 454 may include a filter (e.g., a coarse net) therein to separate the discharged ice slurry S so that the ice slurry S is on the filter and the brine is under the filter. The separated brine is sent to the brine separation pipe 455.

The brine sent to the brine separation pipe 455 is reused for at least one of the production of flake ice and the production of the ice slurry S. That is, the brine sent to the brine separation pipe 455 is injected into a brine storage tank 40 (see Fig. 6) provided in the flake ice production system 300, and reused as a raw material for producing flake ice. Alternatively, the brine sent to the brine separation pipe 455 is mixed with flake ice at a predetermined ratio to be reused for the production of the ice slurry S. However, depending on the degree of contamination, this brine is discarded without being sent to the brine storage tank 40 nor mixed with flake ice.

The ice slurry mixing container 451 and the screw conveyor 420 are connected by an ice slurry supply pipe 456. The ice slurry S in the ice slurry mixing container 451 is sent to the screw conveyor 420 by the ice slurry supply pipe 456.

Fig. 5 is a cross-sectional perspective view illustrating an outline of the flake ice production device 200. As illustrated in Fig. 5, the flake ice production device 200 includes a drum 21, a rotation shaft 22, an injection unit 23, a peeling unit 24, a blade 25, a flake ice discharge port 26, an upper bearing member 27, an injection control unit 28, a heat-proof protection cover 29, a geared motor 30, a rotary joint 31, a refrigerant clearance 34, a bush 38, a refrigerant supply unit 39, and a rotation control unit 37.

The drum 21 includes an inner cylinder 32, an outer cylinder 33 surrounding this inner cylinder 32, and the refrigerant clearance 34 formed between the inner cylinder 32 and the outer cylinder 33. An outer peripheral surface of the drum 21 is covered with the cylindrical heat-proof protection cover 29. An inner cylinder freezing refrigerant is supplied from the refrigerant supply unit 39 to the refrigerant clearance 34 via a refrigerant pipe 45. Due to this, an inner peripheral surface of the inner cylinder 32 is frozen.

The rotation shaft 22 is disposed on the center axis of the drum 21, and rotates about the member axis with the center axis as an axis using the geared motor 30 installed above the upper bearing member 27 as a power source. The rotation speed of the geared motor 30 is controlled by the rotation control unit 37 described later.

The injection unit 23 includes a plurality of pipes having, at the tip end portion, an injection hole 23a for injecting brine toward the wall surface of the inner cylinder 32, and rotates together with the rotation shaft 22. The brine injected from the injection hole 23a adheres to the wall surface of the inner cylinder 32 frozen by the refrigerant, and quickly freezes without being given time to separate into the solute and the solvent. The plurality of pipes constituting the injection unit 23 radially extend from the rotation shaft 22 in the radial direction of the drum 21.

The peeling unit 24 includes a plurality of arms including, at the tip end portion, the blade 25 for peeling the hybrid ice formed on the inner peripheral surface of the inner cylinder 32. The peeling unit 24 extends in the radial direction of the drum 21 and rotates together with the rotation shaft 22. The plurality of arms constituting the peeling unit 24 are mounted so as to be symmetrical with respect to the rotation shaft 22. Although the peeling unit 24 of the flake ice production device 200 illustrated in Fig. 1 includes two arms, the number of arms is not particularly limited.

The blade 25 mounted to the tip end of the arm is made of a member having a length substantially equal to the entire length (entire height) of the inner cylinder 32, and a plurality of saw teeth 25a are formed at an end portion facing the inner peripheral surface of the inner cylinder 32.

The hybrid ice formed on the inner peripheral surface of the inner cylinder 32 becomes flake ice by being peeled off by the blade 25. The flake ice drops from the flake ice discharge port 26. The flake ice dropped from the flake ice discharge port 26 is stored in a flake ice storage tank 44 (see Fig. 6) disposed immediately below the flake ice production device 200.

The amount of flake ice to be produced may be adjusted by adjusting the amount of brine inj ected from the injection unit 23. That is, by increasing the amount of brine injected from the injection unit 23, the amount of flake ice to be produced can be increased. Conversely, by reducing the amount of brine injected from the injection unit 23, the amount of flake ice to be produced can be reduced.

The upper bearing member 27 has an inverted pot-like shape, and seals the upper surface of the drum 21. The bush 38 that supports the rotation shaft 22 is fitted in the center portion of the upper bearing member 27. The rotation shaft 22 is supported only by the upper bearing member 27, and the lower end portion of the rotation shaft 22 is not pivotally supported. That is, since there is no obstacle below the drum 21 when the flake ice peeled off by the blade 25 drops, the lower surface of the drum 21 becomes the flake ice discharge port 26 for discharging the flake ice.

The injection control unit 28 adjusts the amount of the brine injected from the injection unit 23 at the time of injection of brine by the injection unit 23. Note that a specific method of adjusting the amount of brine to be injected from the injection unit 23 is not particularly limited. For example, the amount of brine to be injected may be adjusted by adjusting the number of pipes for injecting brine and the number of pipes not for injecting brine for each of the plurality of pipes constituting the injection unit 23. For example, the amount of brine to be injected may be adjusted by increasing or decreasing the amount of brine to be sent to the plurality of pipes for injecting brine.

The injection control unit 28 executes variable control of the injection pressure when the injection unit 23 injects brine. By making it possible to variably control the injection pressure of brine, it is possible to control the volume of the brine adhering to the inner peripheral surface of the inner cylinder 32. That is, the brine particles adhering to the inner peripheral surface of the inner cylinder 32 are larger when the brine is injected in a liquid state with a weak pressure than when the brine is injected in an atomized state with a strong pressure. Therefore, the hybrid ice generated by injecting the brine in a liquid state with a weak pressure is hardly affected by the temperature of the air inside the drum 21 higher than the temperature of the inner peripheral surface of the inner cylinder 32.

Due to this, the hybrid ice generated by injecting the brine in a liquid state with a weak pressure is less likely to dissolve than the hybrid ice generated by injecting the brine in an atomized state with a strong pressure. A specific method by which the injection control unit 28 variably controls the injection pressure of brine is not particularly limited. For example, the injection pressure may be variably controlled by adjusting diameters of injection ports (not illustrated) of a plurality of pipes for injecting brine.

The heat-proof protection cover 29 has a cylindrical shape and seals a side surface of the drum 21.

The refrigerant supply unit 39 supplies the inner cylinder freezing refrigerant for freezing the inner peripheral surface of the inner cylinder 32 to the refrigerant clearance 34 via the refrigerant pipe 45.

The refrigerant supplied to the refrigerant clearance 34 circulates between the refrigerant clearance 34 and the refrigerant supply unit 39 via the refrigerant pipe 45. Due to this, the inner cylinder freezing refrigerant supplied to the refrigerant clearance 34 can be maintained in a state where the freezing capacity is high.

Fig. 6 is a schematic view illustrating an outline of the flake ice production system. The flake ice production system 300 is configured to include the brine storage tank 40, a pump 41, a brine pipe 42, a brine tank 43, the flake ice storage tank 44, the refrigerant pipe 45, a freezing point adjustment unit 46, and the flake ice production device 200.

The brine storage tank 40 stores brine to become a raw material of hybrid ice. The brine stored in the brine storage tank 40 is supplied to the injection unit 23 via the brine pipe 42 by operating the pump 41. The brine supplied to the injection unit 23 becomes a raw material for generating hybrid ice.

When the brine stored in the brine storage tank 40 decreases, the brine tank 43 supplies brine to the brine storage tank 40. The brine having flowed down without being frozen on the inner peripheral surface of the inner cylinder 32 is stored in the brine storage tank 40, and is supplied to the injection unit 23 via the brine pipe 42 again when the pump 41 is operated.

The flake ice storage tank 44 is disposed immediately below the flake ice production device 200 and stores flake ice dropped from the flake ice discharge port 26 of the flake ice production device 200.

The freezing point adjustment unit 46 adjusts the freezing point of the brine to be supplied from the brine tank 43 to the brine storage tank 40. For example, when the brine is salt water, the freezing point of salt water varies depending on the concentration. Therefore, the freezing point adjustment unit 46 adjusts the concentration of the salt water stored in the brine storage tank 40.

Here, a method of quickly freezing the wrapped nigiri sushi W with the ice slurry S using the present freezing device 400 will be described. The ice slurry S is produced by mixing brine with flake ice produced by the flake ice production device 200 provided in the flake ice production system 300.

Therefore, first, the operation of the flake ice production system 300 including the flake ice production device 200 will be described on the assumption that the brine is salt water.

First, in the flake ice production device 200, the refrigerant supply unit 39 supplies the refrigerant to the refrigerant clearance 34, and the temperature of the inner peripheral surface of the inner cylinder 32 is set to be lower by about -10°C than the freezing point of salt water. This makes it possible to freeze salt water adhering to the inner peripheral surface of the inner cylinder 32.

When the inner peripheral surface of the inner cylinder 32 is frozen, the pump 41 supplies salt water that is brine from the brine storage tank 40 to the injection unit 23 via the brine pipe 42. When salt water is supplied to the injection unit 23, the injection unit 23 injects the salt water toward the inner peripheral surface of the inner cylinder 32. When coming into contact with the inner peripheral surface of the inner cylinder 32, the salt water injected from the injection unit 23 instantly freezes and becomes hybrid ice without being given time to separate into salt as a solute and water as a solvent. Thus, hybrid ice is generated.

The hybrid ice generated on the inner peripheral surface of the inner cylinder 32 is peeled off by the peeling unit 24 rotating in the inner cylinder 32. The hybrid ice peeled off by the peeling unit 24 drops from the flake ice discharge port 26 as flake ice. The flake ice dropped from the flake ice discharge port 26 is stored in the flake ice storage tank 44 disposed immediately below the flake ice production device 200.

As described above, the salt water having flowed down on the inner peripheral surface of the inner cylinder 32 without being frozen and without becoming hybrid ice is stored in the brine storage tank 40, and is supplied again to the injection unit 23 via the brine pipe 42 by operating the pump 41. When the salt water in the brine storage tank 40 decreases, salt water is supplied from the brine tank 43 to the brine storage tank 40.

The ice slurry production device mixes the thus produced flake ice and brine at a predetermined ratio to produce the ice slurry S. By adding flake ice (solid) to the ice slurry, it is also possible to easily adjust the constituent ratio of flake ice (solid) and brine (liquid) contained in the ice slurry. Since the ice slurry has fluidity, the ice slurry can be brought into contact with the packaging material P of the wrapped nigiri sushi W more uniformly than in the state of firm flake ice.

This ice slurry S satisfies the conditions (a) the temperature at the time of completion of melting is below 0°C, and (b) the change rate of solute concentration of a brine in which ice is melted in a melting process is equal to or less than 30%. The ice slurry S can take a large amount of latent heat away from the surroundings when it melts, but the temperature does not rise while the hybrid ice remains without melting being fully completed. Therefore, it is possible to continue to quickly freeze the wrapped nigiri sushi W for a long time.

Since the ice slurry S contains many fine void portions (i.e., air portions) in a state of being produced as flake ice, this void portion is in a state of being freely coupled in the hybrid ice, and the ice slurry S can be prepared in a snow shape or in a sherbet shape. Since the hybrid ice prepared in a snow shape or a sherbet shape has flexibility as a whole, the hybrid ice does not damage the wrapped nigiri sushi W, and rather plays a role as a sponge as a cushioning material for protecting the wrapped nigiri sushi W.

Even in a state of having many void portions (air portions), or even in a state where the void portions are filled with brine by melting of the ice slurry S, the ice slurry S can maintain sufficient fluidity (flexibility) as a whole. For this reason, the ice slurry S can quickly freeze the wrapped nigiri sushi W more efficiently.

Here, when the ratio of the volume of the void portion (air portion) to the total volume of the ice slurry S is defined as a "void ratio", the lower the void ratio is (i.e., the higher the bulk density is), the higher the cooling storage effect becomes.

Therefore, when the ice slurry S is used for the purpose of quick freezing of the wrapped nigiri sushi W, the ice slurry S having a high void ratio (i.e., a low bulk density) is generated. When the ice slurry S is used for the purpose of carrying cold energy, an ice slurry having a low void ratio (i.e., a high bulk density) is generated.

The thermal conductivity of brine (salt water) containing salt as a solute is about 0.58 W/m K, whereas the thermal conductivity of flake ice in which brine containing common salt as a solute is frozen is about 2.2 W/m K. That is, since the thermal conductivity is higher in flake ice (solid) than in brine (liquid), it is possible to freeze the wrapped nigiri sushi W quicker with the flake ice (solid).

However, the area in contact with the wrapped nigiri sushi W becomes small with the flake ice (solid) as it is. Therefore, the flake ice and the brine are mixed to give it a state of the ice slurry S, thereby providing fluidity. This can uniformly bring the flake ice (solid) into contact with the wrapped nigiri sushi W, and can quickly freeze the wrapped nigiri sushi W.

Here, a specific numerical value of the bulk density of the ice slurry S is presented. The bulk density that can be defined as the ice slurry S becomes 0.48 g/cm³ to 0.78 g/cm³. When the ice slurry S is used for the purpose of freezing fresh foods, the bulk density is preferably set to 0.69 g/cm³ to 0.78 g/cm³.

When the ice slurry S is used for the purpose of refrigerating the wrapped nigiri sushi W, the bulk density is preferably 0.48 g/cm³ to 0.54 g/cm³. When the ice slurry S is used for the purpose of carrying cold energy, ice using saturated saline water may be further mechanically compressed to obtain a bulk density of 0.75 g/cm³ to 0.95 g/cm³.

Conventionally, it is known that when a solute is dissolved in a solvent, the freezing point of the aqueous solution becomes lower than the freezing point of the solvent before the solute is dissolved (freezing point depression phenomenon). That is, ice obtained by freezing an aqueous solution in which a solute such as common salt is dissolved becomes ice frozen at a temperature (i.e., below 0°C) lower than that of ice obtained by freezing fresh water (i.e., water in which a solute such as common salt is not dissolved).

Here, heat required when ice as a solid changes (melts) into water as a liquid is referred to as "latent heat". Since this latent heat is not accompanied by a temperature change, hybrid ice can continue to maintain a stable state at a temperature below the freezing point (0°C) of fresh water at the time of melting. Therefore, a state in which cold energy is stored can be maintained.

That is, originally, the freezing ability of ice obtained by freezing an aqueous solution in which a solute such as common salt is dissolved should be higher than that of ice obtained by freezing fresh water. However, even if an attempt is made to produce ice obtained by freezing an aqueous solution in which a solute such as common salt is dissolved, actually, the aqueous solution (e.g., salt water) is hardly frozen as it is, and a portion of fresh water not containing the solute (common salt or the like) is frozen first.

For this reason, as a result of freezing an aqueous solution in which a solute such as common salt is dissolved, the generated substance becomes a mixture of ice in which fresh water containing no solute (common salt or the like) is frozen and the solute (e.g., crystals of common salt or the like). Even if ice having a lowered freezing point (ice in which salt water or the like is frozen) is generated, the amount thereof is very small and is not practical. Thus, the ice slurry S is [ice] having a freezing point below the freezing point (0°C) of fresh water, but can be produced by the flake ice production system.

The ice slurry S satisfies the above-described condition (a) the temperature at the time of completion of melting is below 0°C. Since the ice slurry S is an aqueous solution (salt water or the like) containing a solute (common salt or the like), the freezing point of the ice slurry S is lower than the freezing point of fresh water in which the solute is not dissolved. Therefore, the ice slurry satisfies the condition that the temperature at the time of completion of melting is below 0°C.

The "temperature at the time of completion of melting" refers to a temperature of an aqueous solution at a time point when the ice slurry S is placed in an environment of equal to or greater than a melting point (e.g., at room temperature and under atmospheric pressure) to start melting of the ice slurry S and all the ice slurry S is completely melted to become the aqueous solution (brine).

On the other hand, in some cases, it is preferable to bring the freezing point of the ice slurry S close to the freezing point of the wrapped nigiri sushi W. For example, if there is a reason such as to prevent damage to the wrapped nigiri sushi W, the temperature at the time of melting completion is preferably not too high, and for example, is preferably equal to or greater than -21°C.

The ice slurry S satisfies the above-described condition (b) the change rate of solute concentration of an aqueous solution in which ice is melted in a melting process is equal to or less than 30%. The ice slurry S has the change rate of solute concentration of an aqueous solution in which ice is melted in a melting process (hereinafter, sometimes abbreviated as "change rate of solute concentration" in the present specification) is equal to or less than 30%. Even when a conventional technique is used, there is a case where ice having a slightly lowered freezing point is generated. However, most of it is merely a mixture of ice of water not containing a solute and a crystal of the solute, and therefore freezing ability is not sufficient.

Thus, in the case of a mixture of ice obtained by freezing water not containing a solute and a crystal of the solute, when the ice is placed under a melting condition, the speed at which the solute is eluted becomes unstable with melting. Specifically, more solute is eluted at a timing closer to the start of melting. As the melting progresses, the amount of the solute to be eluted decreases. That is, the elution amount of the solute decreases as the timing is closer to the completion of melting.

On the other hand, since the hybrid ice is ice obtained by freezing an aqueous solution containing a solute, it has a feature that a change in elution speed of the solute in the melting process is small. Specifically, the change rate of the solute concentration of the aqueous solution in which the hybrid ice is melted in the process of melting the hybrid ice is 30%. Here, the "change rate of the solute concentration of the aqueous solution in which the hybrid ice is melted in the melting process" means a ratio of the concentration of the aqueous solution at the time of melting completion to the solute concentration of the aqueous solution melted at an arbitrary timing in the melting process. The "solute concentration" means the ratio of the mass of the solute dissolved in the aqueous solution.

The change rate of the solute concentration in the hybrid ice is not particularly limited as long as the change rate is within 30%, but it means that the smaller the change rate is, the higher the purity of the hybrid ice is, i.e., the higher the freezing ability of the hybrid ice is.

Since the hybrid ice is excellent in freezing ability, the hybrid ice is suitable for use as a refrigerant for quickly freezing the wrapped nigiri sushi W. Examples of the low-temperature refrigerant for quickly freezing the wrapped nigiri sushi W include, in addition to the hybrid ice, an organic solvent used as an antifreeze liquid such as ethanol. However, hybrid ice is higher in thermal conductivity and higher in specific heat than these antifreeze liquids. For this reason, the hybrid ice is useful in that the freezing ability is superior to other refrigerants below 0°C such as antifreeze liquids.

As illustrated in Fig. 1, the ice slurry S produced by the flake ice production system 300 is injected into the ice slurry mixing container 451 from the pipe 453. This ice slurry S is injected into the screw conveyor 420 by the ice slurry supply pipe 456. The ice slurry S is pumped by the screw in the cylindrical body of the screw conveyor 420, passes through the supply side pipe 422, is ejected into the freezing tank 410 from the bottom surface portion 411 of the freezing tank 410, and is supplied.

Since the supply side pipe 422 is inclined and the ice slurry ejection port 414 is configured to eject the ice slurry S so as to face the moving direction of the rack 432, the ice slurry S is ejected and supplied so as to generate a downstream water flow in the freezing tank 410. The ice slurry S is stored in the freezing tank 410 in a state of being maintained at equal to or less than -10°C. Since a water flow of the ice slurry S is generated in the freezing tank 410, a solute in the ice slurry S does not remain in the bottom surface portion 411.

Since the freezing tank 410 is surrounded by the heat insulation material 440, the ice slurry S in the freezing tank 410 does not melt. Since the boundary portion of the freezing tank 410 where the bottom surface portion 411, the side surface portion 412 (bottom side), and the end portion 413 are adjacent to each other is smoothly continued in a curved surface shape, the ice slurry S does not remain at this boundary portion, and the solute in the ice slurry S does not precipitate.

In the freezing tank 410, the hanger 431 of the movement means 430 is set on the rack 432 and moves from the upstream side to the downstream side. On the hanger 431, the wrapped nigiri sushi W is placed. The hanger 431 is set on the rack 432, and the rack 432 is suspended on the conveyor 433, whereby the hanger moves in the freezing tank 410. By moving the hanger 431 in the freezing tank 410, the movement means 430 becomes a flow means for causing the ice slurry S to flow so that the ice slurry S collides the wrapped nigiri sushi W at equal to or greater than a predetermined relative speed.

In the freezing tank 410, the ice slurry S is injected from the upstream side toward the downstream side by the supply side pipe 422, whereby the wrapped nigiri sushi W on the hanger 431 advances against the flow of the ice slurry S. Therefore, the ice slurry S is brought into a state where a turbulent flow occurs in the freezing tank 410, and quickly freezes the wrapped nigiri sushi W.

While the wrapped nigiri sushi W is moving from the upstream side to the downstream side in the freezing tank 410, the moisture contained in the wrapped nigiri sushi W is quickly frozen by the ice slurry S at equal to or less than -15°C. Since the ice slurry S has a large thermal conductivity and a large heat capacity, the speed of freezing the wrapped nigiri sushi W is very high. Therefore, the rice of the wrapped nigiri sushi W quickly passes through the temperature zone of 4 to 2°C, which is the temperature immediately before which water freezes, and quickly passes through the temperature zone of about 4°C to -7°C, whereby the α-starch is quickly frozen before retrograding. The cell wall of the ingredient of the wrapped nigiri sushi W does not collapse, and drip does not occur due to the moisture of 60 to 70% contained in the rice. Even if there is a gap in the packaging material P of the wrapped nigiri sushi W and the ice slurry S adheres to the nigiri sushi, the ice slurry S is harmless, and hence there is no food safety problem.

The thus quickly frozen wrapped nigiri sushi W is lifted from the ice slurry S at the downstream end of the freezing tank 410. Then, the hanger 431 is taken out from the rack 432. The wrapped nigiri sushi W on the hanger 431 is taken out from the hanger 431. Since the wrapped nigiri sushi W is quickly frozen, the gelatinized starch in the rice, which is contained in a large amount before the quick freezing, hardly retrogrades. The starch remaining gelatinized after quickly frozen is equal to or greater than 80%, preferably equal to or greater than 90% of the total starch. When the α-starch is contained in the food, it is possible to prevent the α-starch from retrograding. When meat or fish is contained in the food, it is possible to prevent cells of meat and fish from being destroyed.

The state of the quality of seafood, which is ingredients of the nigiri sushi, is determined by the K value. The K value represents the degree to which adenosine triphosphate (ATP) in the fish body is degraded by an enzyme possessed by the fish itself after the death of the fish. The larger the K value is (the more the inosinic acid, which is a taste component derived from ATP, is degraded), the lower the freshness is. The K value of the seafood, which is an ingredient of the quickly frozen wrapped nigiri sushi W, is equal to or less than 20, preferably equal to or less than 10. Therefore, the fresh state of the ingredient of the wrapped nigiri sushi W is maintained.

The quickly frozen wrapped nigiri sushi W is stored in a freezer, taken out from the freezer when necessary, and thawed. The quickly frozen wrapped nigiri sushi W can be thawed by being immersed in stored tap water. When the packaging material P is undone, the wrapped nigiri sushi W having been thawed becomes nigiri sushi F placed on the plate. This nigiri sushi F has a good eating quality because the rice contains a large amount of α-starch and the ingredient has a sufficiently low K value.

The hanger 431 on which the wrapped nigiri sushi W is not placed is returned to the upstream side of the freezing tank 410. The rack 432 moves on the return path of the conveyor 433 and returns to the upstream end of the freezing tank 410. The hanger 431 on which the next new wrapped nigiri sushi W is placed is set in this rack 432.

The ice slurry S is successively supplied from the screw conveyor 420 into the freezing tank 410 through the supply side pipe 422, and is discharged from the inside of the freezing tank 410 to the ice slurry return pipe 452. The ice slurry S to be discharged has a brine shape by freezing the wrapped nigiri sushi W. The ice slurry S to be discharged to the ice slurry return pipe 452 may become slightly cloudy.

The ice slurry S having become brine-shaped flows in the ice slurry return pipe 452 and is separated into the ice slurry S and brine by the separation means 454. The brine separated by the separation means 454 sometimes becomes cloudy. For the cloudy brine, impurities are removed. For example, the ice slurry regeneration means 450 includes a brine tank (not illustrated) that stores the cloudy brine. Brine is injected into this brine tank from the downstream end of the brine separation pipe 455. Impurities are precipitated in the brine tank, and clear, supernatant brine is separated.

The clean brine is sent to the brine storage tank 40 of the flake ice production system 300 or mixed with the produced flake ice, thereby producing the new ice slurry S. This new ice slurry S is injected into the ice slurry mixing container 451 from the pipe 453.

The ice slurry S separated by the separation means 454 is injected from the ice slurry return pipe 452 into the ice slurry mixing container 451. It is mixed in the ice slurry mixing container 451 with the ice slurry S produced by the flake ice production system 300. The ice slurry S mixed in the ice slurry mixing container 451 is injected from the ice slurry supply pipe 456 into the screw conveyor 420, is ejected again into the freezing tank 410, and is supplied.

Although embodiments of the present invention have been described above, the present invention is by no means limited to the configurations described in the above embodiment, and includes other embodiments and modifications considered within the scope of matters described in the claims. Various changes and combinations of the above embodiments may be made without departing from the gist of the present invention.

For example, although the freezing device 400 in the above-described embodiments includes the ice slurry regeneration means 450, the ice slurry regeneration means 450 may not necessarily be included in a case where the ice slurry S can be circulated and continuously supplied into the freezing tank 410. In a case where all the ice slurry S once used is discarded, the ice slurry return pipe 452 may not be included, and the ice slurry S may be overflowed from the freezing tank 410.

In this case, the ice slurry S produced by the flake ice production system 300 is directly sent to the screw conveyor 420. In this case, the screw conveyor 420, the ice slurry supply pipe 456, and the flake ice production system 300 correspond to the ice slurry supply means in the claims.

Although the freezing tank 410 in the above-described embodiments includes the bottom surface portion 411 and the pair of side surface portions 412, the freezing tank 410 may have a gutter shape where the bottom surface portion 411 and the side surface portion 412 are indistinguishable from each other. The gutter shape in this case is a shape having an arcuate portion bulging downward.

The screw conveyor 420 in the above-described embodiments includes the screw, but may include a suction means for forcibly moving the ice slurry S in the cylindrical member as a simple cylindrical body in place of the screw conveyor 420.

The supply side pipe 422 in the above-described embodiments is connected to the freezing tank 410 so as to supply the ice slurry S in the direction opposite to the moving direction of the hanger 431, i.e., in the direction from the downstream side toward the upstream side. However, the direction with respect to the freezing tank 410 may be appropriately changed depending on the state of the ice slurry S, the inner diameter of the supply side pipe 422, and the like.

In the embodiments described above, the wrapped nigiri sushi W is frozen by moving in the ice slurry S. However, the wrapped nigiri sushi W may be descended and ascended by the hanger so as to be taken in and out from the ascended hanger 431 in a state where the wrapped nigiri sushi W is immersed into the ice in the ice slurry S by the hanger 431 descending.

The movement means 430 in the above-described embodiments includes the rack 432 and the hanger 431, but it may not include the rack 432, and the hanger 431 may move. Furthermore, the movement means 430 may include a hook that directly hooks the wrapped nigiri sushi W, a cord-like body that connects a large number of hooks in series, or the like in place of the hanger 431.

The freezing tank 410 in the above-described embodiments has a shape like a bathtub, and the hanger 431 moves from the upstream side to the downstream side. However, although not illustrated, the freezing tank 410 may be an annular flow path through which the ice slurry S circulates. The flow path may have two parallel straight lines and two curved lines connecting adjacent end portions of the two straight lines. The flow path includes a supply port for the ice slurry S and a discharge port for the ice slurry S.

In this case, the hanger 431 may move in the flow path or may be stopped at a fixed position. In a case where the hanger 431 is stopped, a propulsion means for applying hydraulic power to the ice slurry S in the flow path is provided. The propulsion means serves as a flow means for causing the ice slurry S to flow so that the ice slurry S collides with the wrapped nigiri sushi W at equal to or greater than a predetermined relative speed. The propulsion means is disposed at a boundary portion between the upstream side of at least one of the straight lines and the downstream side of the curved line, the straight line is set to be a region for freezing the wrapped nigiri sushi W, and the hanger 431 descends and ascends. A guide vane that divides at least one of the curved lines into a plurality of lanes may be provided.

A frozen item F in the embodiments described above is the wrapped nigiri sushi W. However, as long as the frozen item F contains a large amount of α-starch and is inhibited from retrograding, the frozen item F may be not only noodles such as udon noodles and ramen noodles but also various noodles such as pastas, as well as pizzas, okonomiyaki pancakes, takoyaki octopus dumplings, and sponge cakes, and is thus not limited. It has been described that the food including the above-described wrapped nigiri sushi W is vacuumed. However, the frozen food F that does not particularly lose its shape does not necessarily need to be vacuum-packed.

In summary, the food freezing device to which the present invention is applied only needs to have the following configuration, and can take various embodiments. That is, the food freezing device 400 to which the present invention is applied includes:
the freezing tank 410 that stores the ice slurry S in a state of being maintained at equal to or less than -10°C;
the hanger 431 that holds the α-starch-containing frozen food F in the ice slurry S stored in the freezing tank 410;
the ice slurry supply means 420, 450, 456, and 300 for supplying the ice slurry S into the freezing tank 410; and
the flow means 130 for causing the ice slurry to flow such that the ice slurry S collides with the frozen food F at equal to or greater than a predetermined relative speed.

The ice slurry S stored in the freezing tank 410 has a large thermal conductivity and a large heat capacity, and a very high freezing speed. In the food freezing device 400, the hanger 431 holds the frozen food F in the ice slurry S stored in the freezing tank 410 in a state of being maintained at equal to or less than -20°C, and the ice slurry S is caused to collide with the frozen food F at equal to or greater than a predetermined relative speed. Due to this, the frozen food F containing a large amount of α-starch is quickly frozen so as to pass through a temperature zone in which retrograding of starch easily proceeds, i.e., a temperature zone of 2 to 4°C, immediately before which water freezes, and a large amount of α-starch does not retrograde. The frozen food F having been quickly frozen is stored in a frozen state and thawed as necessary. The thawed food contains a large amount of α-starch, and gives a good eating quality.

One aspect of the food freezing device 400 to which the present invention is applied is that
the frozen food F is a cooked rice food such as nigiri sushi or noodles such as udon noodles.

Since with a cooked rice food such as nigiri sushi or noodles such as udon noodles, the eating quality of the cooked rice food itself or the noodles themselves can be directly tasted, the delicious taste due to the α-starch contained in a large amount in the thawed food is brought out. Even when the moisture content of the rice of the nigiri sushi W is 60 to 70%, the food freezing device of the present invention can perform quick freezing.

Another aspect of the food freezing device 400 to which the present invention is applied is that
the frozen food F is vacuum-packed.

Since the vacuum-packed frozen food F is not in direct contact with the ice slurry S, it is possible not to change the taste by using the ice slurry S. When the frozen food F is nigiri sushi, the vinegared rice is not broken up, and a state in which the vinegared rice is put together with a desired hardness is maintained.

A food freezing method to which the present invention is applied is a food freezing method that quickly freezes an α-starch-containing frozen food, the method including
quickly freezing the frozen food F by storing the ice slurry S in the freezing tank in a state of being maintained at equal to or less than -10°C, holding the frozen food in the ice slurry in the freezing tank by a hanger, and causing the ice slurry S to flow such that the ice slurry S collides with the frozen food at equal to or greater than a predetermined relative speed.

The ice slurry S stored in the freezing tank 410 has a large thermal conductivity and a large heat capacity, and a very high freezing speed. Due to this, the frozen food F containing a large amount of α-starch is held by the hanger 431 in the ice slurry S maintained at equal to or less than -10°C in the freezing tank 410, and the ice slurry S collides with the frozen food F at equal to or greater than the predetermined relative speed, whereby the frozen food F quickly passes through a temperature zone in which retrograding of starch easily proceeds, i.e., a temperature zone of 2 to 4°C, immediately before which water freezes, and is quickly frozen. Therefore, it is possible to prevent the frozen food containing a large amount of α-starch from retrograding. Therefore, the frozen food that is a quickly frozen item having been thawed contains a large amount of α-starch, and gives a good eating quality.

In one aspect of the food freezing method to which the present invention is applied,
the frozen food F is a cooked rice food such as nigiri sushi or noodles such as udon noodles.

With a cooked rice food such as nigiri sushi or noodles such as udon noodles, the eating quality of the cooked rice food itself or the noodles themselves can be tasted, whereby it is possible to taste the delicious taste due to the α-starch contained in a large amount in the thawed food. Even when the moisture content of the rice of the nigiri sushi W is 60 to 70%, the food freezing device of the present invention can perform quick freezing.

In another aspect of the food freezing method to which the present invention is applied,
the frozen food is vacuum-packed.

Since the vacuum-packed frozen food F is not in direct contact with the ice slurry S, it is possible not to change the taste by using the ice slurry S. When the frozen food F is nigiri sushi, the vinegared rice is not broken up, and a state in which the vinegared rice is put together with a desired hardness is maintained.

A frozen food to which the present invention is applied is
a frozen food where the frozen food F containing gelatinized starch is quickly frozen, in which
gelatinized starch accounts for equal to or greater than 80% of a total starch.

Since equal to or greater than 80% of the total starch contains α-starch, the frozen food where the frozen food F is quickly frozen has a good eating quality.

In one aspect of the freezing method of a frozen food to which the present invention is applied, the frozen food F is a cooked rice food or noodles.

Since with a cooked rice food or noodles, the eating quality of the cooked rice food itself or the noodles themselves is tasted, the eating quality due to the α-starch contained in a large amount in the thawed food is brought out. Even when the moisture content of the rice of the nigiri sushi W is 60 to 70%, the food freezing device of the present invention can perform quick freezing.

The cooked rice food according to one aspect of the freezing method of a frozen food to which the present invention is applied is nigiri sushi on which seafood is placed on vinegared rice, and a K value of the seafood is equal to or less than 20.

In the frozen food of the present invention, since the seafood of the nigiri sushi quickly pass through the temperature zone of -3 to -7°C by the ice slurry S, the K value of the seafood is set to equal to or less than 20, whereby it is possible to taste a fresh eating quality of the thawed nigiri sushi.

### Reference Signs List

- 1: cooling storage agent freezing device
- 40: brine storage tank
- 200: flake ice production device
- 300: flake ice production system
- 400: freezing device
- 410: freezing tank
- 411: bottom surface portion
- 412: side surface portion
- 414: ice slurry ejection port
- 415: ice slurry discharge port
- 420: screw conveyor
- 422: supply side pipe
- 430: movement means (flow means)
- 431: hanger
- 433: conveyor
- 440: heat insulation material
- 450: ice slurry regeneration means
- 451: ice slurry mixing container
- 452: ice slurry return pipe
- 453: pipe
- 454: separation means
- 455: brine separation pipe
- 456: ice slurry supply pipe
- F: frozen food (nigiri sushi)
- S: ice slurry
- W: wrapped nigiri sushi

## Claims

1. A food freezing device comprising:
a freezing tank that stores an ice slurry in a state of being maintained at equal to or less than -10°C;
a hanger that holds an α-starch-containing frozen food in the ice slurry stored in the freezing tank;
an ice slurry supply means for supplying an ice slurry into the freezing tank; and
a flow means for causing an ice slurry to flow such that an ice slurry collides with the frozen food at equal to or greater than a predetermined relative speed.

2. The food freezing device according to claim 1, wherein
the frozen food is a cooked rice food such as nigiri sushi or noodles such as udon noodles.

3. The food freezing device according to claim 1 or 2, wherein
the frozen food is vacuum-packed.

4. A food freezing method that quickly freezes an α-starch-containing frozen food, the method comprising:
quickly freezing a frozen food by storing an ice slurry in a freezing tank in a state of being maintained at equal to or less than -10°C, holding the frozen food in an ice slurry in the freezing tank by a hanger, and causing an ice slurry to flow such that an ice slurry collides with the frozen food at equal to or greater than a predetermined relative speed.

5. The food freezing method according to claim 4, wherein
the frozen food is a cooked rice food such as nigiri sushi or noodles such as udon noodles.

6. The food freezing method according to claim 4 or 5, wherein
the frozen food is vacuum-packed.

7. A frozen food where a frozen food containing gelatinized starch is quickly frozen, wherein
gelatinized starch accounts for equal to or greater than 80% of a total starch.

8. The frozen food according to claim 7, wherein
the frozen food is a cooked rice food or noodles.

9. The frozen food according to claim 8, wherein
the cooked rice food is nigiri sushi on which seafood is placed on vinegared rice, and a K value of the seafood is equal to or less than 20.
